# EUROPEAN PATENT SPECIFICATION

(11) **EP 4 571 113 B1**
(45) Date of publication and mention of the grant of the patent: **17.06.2026**
(21) Application number: 24212864.3
(22) Date of filing: 14.11.2024
(51) Int. Cl.: F04C 2/18, F04C 11/00, F04C 15/00

(54) **GEAR PUMP ASSEMBLY**
ZAHNRADPUMPENANORDNUNG
ENSEMBLE POMPE À ENGRENAGES

(30) Priority: 12.12.2023 GB 202318900
(43) Date of publication of application: 18.06.2025
(73) Proprietor: Rolls-Royce plc, London N1 9FX (GB)
(72) Inventor: Yates, Martin, Derby, DE24 8BJ (GB)
(74) Representative: Rolls-Royce plc

(56) References cited:
- US-A1- 2017 298 934
- US-A1- 2018 100 504
- US-A1- 2019 078 619

## Description

### FIELD

The present disclosure relates to a gear pump assembly for pumping a fluid, and in particular, to a gear pump assembly for a fuel supply system of a gas turbine engine.

### BACKGROUND

A fuel supply system of a gas turbine engine typically includes a gear pump assembly for pumping the fuel. The gear pump assembly includes a primary gear stage and a secondary gear stage. In the gear pump assembly, gears are commonly supported by bearing blocks which are adapted to receive respective bearing shafts of the gears through a bore of each bearing block. These bearing blocks also typically abut axially directed faces of respective gears of the gear pump assembly. The bearing blocks may be solid bearing blocks or pressure loaded bearing blocks. A solid bearing block typically transfers load from journals to a pump housing, and additionally can transfer axial load to the pump housing. Pressure loaded bearing blocks also transfer load from journals to the pump housing, and in addition can provide an axial force and a moment against the axially directed face of the gear which the bearing block abuts.

In some applications, operation of the gear pump assembly may cause excessive wear on an outer surface of the pressure loaded bearing block of the secondary gear stage. One of the main reasons for this excessive wear of the pressure loaded bearing block is axial and radial movements of the pressure loaded bearing blocks either when the secondary gear stage is in a depressurized state or during the transition of the secondary gear stage between a pressurized state and the depressurized state.

Such axial and radial movements of the pressure loaded bearing block, particularly on the pressure loaded bearing block adjacent to driver gear, is due to low pressure rise across the secondary gear stage and inter-tooth loading between the driver gear and a driven gear in the secondary gear stage of the gear pump assembly. This may reduce an efficiency of the fuel supply system as well as the gas turbine engine. In other words, wear of the pressure loaded bearing block may lead to excessive reduction in delivery flow of the gear pump assembly. Conventional solutions for increasing or maintaining the delivery flow of the gear pump assembly in the depressurized state may induce additional heat to the gear pump assembly, which may require further modifications to a heat management system and a control system with the risk of introducing instabilities in the delivery flow of the gear pump assembly.

Therefore, there is a need for an improved gear pump assembly with reduced axial and radial movements of the pressure loaded bearing block thereby reducing the wear of the pressure loaded bearing block.

United States patent application US 2018/0100504 A1 discloses a gear pump that has one or more gears with bearing shafts supported by respective pressure-loaded gear pump bearing blocks. Each pressure-loaded bearing block has: a bore adapted to receive the bearing shaft of a gear of the pump; a thrust face at one end adapted to slidingly engage with a side surface of the gear, and an opposing rear face at the other end, the pump being adapted such that, in use, pressurised fluid is supplied to the rear face to provide a hydraulic load urging the thrust face of the bearing block towards the side surface of the gear; and a seal carried by the rear face, the seal, in use, partitioning higher fluid pressure and lower fluid pressure portions of the rear face. The gear pump also has a pressure regulating valve that is arranged such that, in use, the fluid pressure difference between the higher and lower fluid pressure portions of the rear face of the bearing block is adjustable by the valve to vary said hydraulic load.

United States patent application US 2019/0078619 A1 discloses a gear pump bearing block that has a bush formed of antifriction alloys. The bush has a cylindrical portion that provides a bore adapted to receive a bearing shaft of a gear of the pump. The bush also has a thrust face at the end of the cylindrical portion, the thrust face being adapted to slidingly engage with a side surface of the gear. The bush has an inner component that provides the bore, and an outer component that forms a radially outer surface of the cylindrical portion. The inner and outer components are formed of lead bronze alloys. The lead bronze alloy of the outer component has a higher lead content than the lead bronze alloy of the inner component.

United States patent application US 2017/0298934 A1 discloses a gear pump or a gear motor that has a casing, a helical drive gear, a helical driven gear, a drive-side space, and an idler-side space. The drive and driven gears mesh with each other in the casing to partition inside of the casing so as to include high and low pressure spaces. The drive-side and idler-side spaces are each configured to allow pressure therein to become higher than a pressure in the low-pressure space. The drive-side space faces an end portion of a drive shaft rotatably supporting the drive gear. The idler-side space faces an end portion of an idler shaft rotatably supporting the driven gear. The end portion of the drive shaft is pushed in a predetermined direction by working fluid supplied to the drive-side space. The end portion of the idler shaft is pushed in the predetermined direction by working fluid supplied to the idler-side space.

### SUMMARY

According to a first aspect, there is provided a gear pump assembly as set out in claim 1.

The pressurized flow of the fluid from the primary gear stage to the driver bore portion in the secondary gear stage generates an additional radial load on the secondary driver bearing block thereby limiting the radial and axial movements of the secondary driver bearing block. The reduced movement of the secondary driver bearing block may cause minimal wear of the secondary driver bearing block, particularly when the secondary gear stage is in the depressurized state. The minimal wear of the secondary driver bearing block may prevent radial deformation of the secondary driver bearing block during the operation of the gear pump assembly.

Therefore, the inclusion of the fluid passage between the primary gear stage and the driver bore portion may increase an efficiency and improve performance of the gear pump assembly of the present disclosure.

In some embodiments, the gear pump assembly further includes a flow restrictor fluidly disposed in the fluid passage between the primary gear stage and the driver bore portion to limit a leakage of the fluid from the primary gear stage to the driver bore portion. This may ensure that an adequate pressure is maintained to provide sufficient radial load on the secondary driver bearing block so as to limit the radial and axial movements of the secondary driver bearing block. Prevention of fluid leakage from the primary gear stage to the secondary gear stage may ensure that the secondary gear stage is not pressurized at lower flow pressures of the fluid in the gear pump assembly.

In some embodiments, the flow restrictor is an orifice plate comprising at least one orifice. The orifice plate controls an amount of fluid which can be conveyed from the primary gear stage to the driver bore portion in the secondary gear stage. The at least one orifice may have a circular configuration. In an application, the at least one orifice may include a plurality of orifices. The plurality of orifices may have the same diameter or have different diameters.

In some embodiments, the flow restrictor is a pressure-actuated valve. The pressure-actuated valve may be set to actuate at a particular threshold pressure or may be externally adjustable so as to control the pressurized flow of the fluid from the primary gear stage to the driver bore portion in the secondary gear stage.

In some embodiments, the flow restrictor is an electrically actuated valve. The electrically actuated valve may control the amount of fluid which can be conveyed from the primary gear stage to the driver bore portion in the secondary gear stage in response to receiving a control signal from a controller. The electrically actuated valve may be a solenoid-controlled valve.

In some embodiments, the gear pump assembly further includes a pocket disposed on a surface of the driver bore portion. The pocket is disposed in fluid communication with the fluid passage. The pocket is configured to receive the pressurized flow of the fluid from the fluid passage and deliver the pressurized fluid to the driver bore portion in the secondary gear stage. The pocket acts as a provision for the pressurized fluid to add radial load on the secondary driver bearing block thereby limiting the radial and axial movements of the secondary driver bearing block. The pocket may be formed by machining a surface of the driver bore portion.

In some embodiments, the gear pump assembly further includes a piston bore extending from the driver bore portion and disposed in fluid communication with the fluid passage. The gear pump assembly further includes a piston slidably received within the piston bore and engaging the secondary driver bearing block. The piston is configured to be driven by the pressurized fluid towards the secondary driver bearing block in order to apply a movement limiting force on the secondary driver bearing block. The piston is energized by the flow of the pressurized fluid in order to apply additional radial load on the secondary driver bearing block which in turn reduces the wear of the secondary driver bearing block.

In some embodiments, the gear pump assembly further includes a non-return valve fluidly disposed between the secondary gear stage and the outlet. The non-return valve is configured to allow a unidirectional flow from the secondary gear stage to the outlet. The non-return valve prevents a backflow of the fluid from the outlet to the secondary gear stage. The non-return valve maintains an adequate pressure range in the secondary gear stage. In an application, the non-return valve may be a check valve.

In some embodiments, the gear pump assembly further includes a primary passage fluidly communicating the primary gear stage with the outlet. The gear pump assembly further includes a port fluidly communicating the primary passage with the fluid passage. Thus, the fluid passage is a bleed passage between the primary passage and the secondary gear stage. The bleed passage extends between the port and the driver bore portion in the secondary gear stage. The port may be a vent formed in the housing of the gear pump assembly.

In some embodiments, the secondary gear stage has a greater displacement than the primary gear stage. Typically, the primary gear stage is pressurized at all flight conditions, while the secondary gear stage is pressurized for take-off and low speed start conditions. The secondary gear stage functions as a step-a-side gear box for the primary gear stage.

According to a second aspect, there is provided a fuel supply system as set out in claim 11.

Inclusion of the gear pump assembly of the second aspect in the fuel supply system may improve an overall performance of the fuel supply system to supply the fuel to the gas turbine engine.

According to a third aspect, there is provided a gas turbine engine as set out in claim 12.

Inclusion of the fuel supply system of the third aspect in the gas turbine engine may increase an efficiency of the gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

Specific thrust of an engine may be defined as the net thrust of the engine divided by the total mass flow through the engine. At cruise conditions, the specific thrust of an engine described and/or claimed herein may be less than (or in the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e., the values may form upper or lower bounds), for example in the range of from 80 Nkg-1s to 100 Nkg-1s, or 85 Nkg-1s to 95 Nkg-1s. Such engines may be particularly efficient in comparison with conventional gas turbine engines.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of a gas turbine as described and/or claimed herein may have any desired number of fan blades, for example 14, 16, 18, 20, 22, 24 or 26 fan blades.

### BRIEF DESCRIPTION OF THE DRAWINGS

Embodiments will now be described by way of example only, with reference to the Figures, in which:
**FIG. 1** is a sectional side view of a gas turbine engine;
**FIG. 2** is a cut away perspective view of a gear pump assembly for pumping a fluid in the gas turbine engine of FIG. 1, according to an embodiment of the present disclosure;
**FIG. 3** is an exploded view of the gear pump assembly, with some components not shown;
**FIG. 4** is a schematic view of the gear pump assembly of FIG. 3, with some components not shown;
**FIG. 5** is a schematic view of a flow restrictor of the gear pump assembly of FIG. 4; and
**FIG. 6** is a schematic view of a gear pump assembly of FIG. 3, with some components not shown, according to another embodiment of the present disclosure.

### DETAILED DESCRIPTION

Aspects and embodiments of the present disclosure will now be discussed with reference to the accompanying Figures. Further aspects and embodiments will be apparent to those skilled in the art.

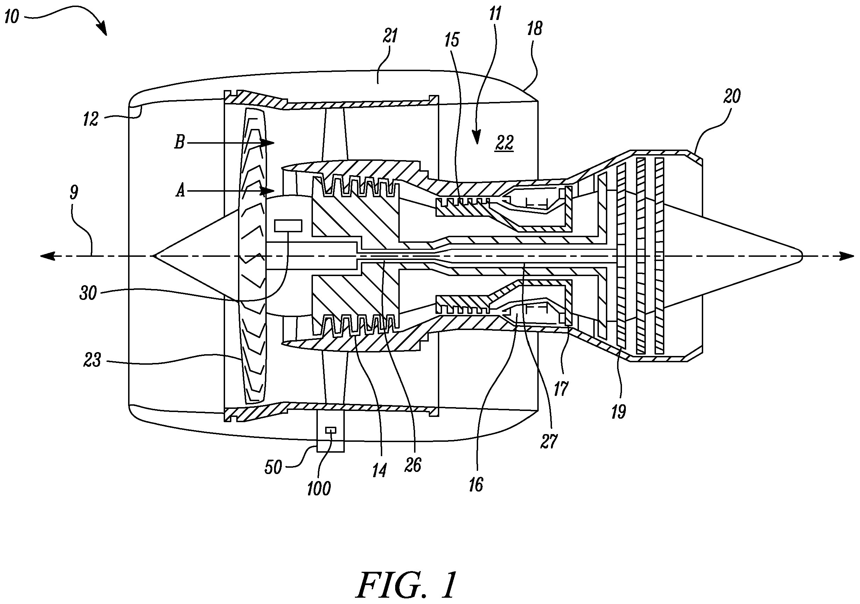

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises an engine core 11 that receives the core airflow A. The engine core 11 comprises, in axial flow series, a low pressure compressor 14, a high pressure compressor 15, a combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine 10 (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

In addition, the present disclosure is equally applicable to aero gas turbine engines, marine gas turbine engines, and land-based gas turbine engines.

The gas turbine engine 10 further includes a fuel supply system 50 (shown schematically in FIG. 1) to supply adequate amount of fuel to the gas turbine engine 10. The fuel supply system 50 includes a gear pump assembly 100 for pumping a fuel or a fluid. The fuel supply system 50 may also include other parts (not shown), such as an auxiliary gear box attached to the engine core 11.

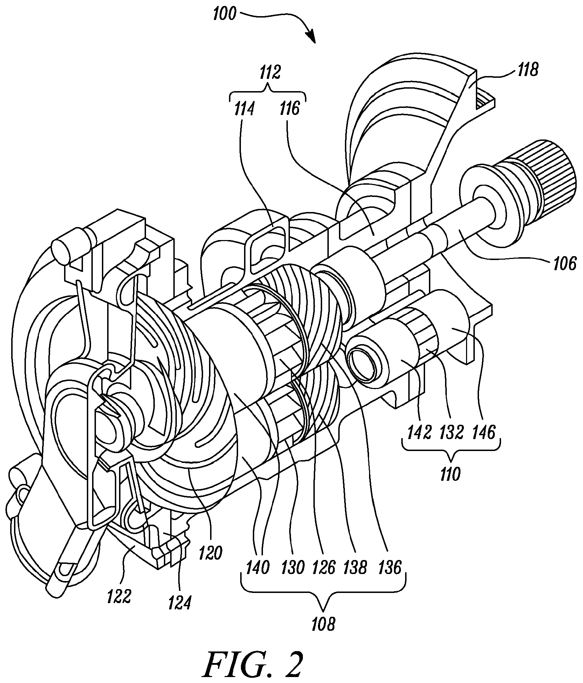

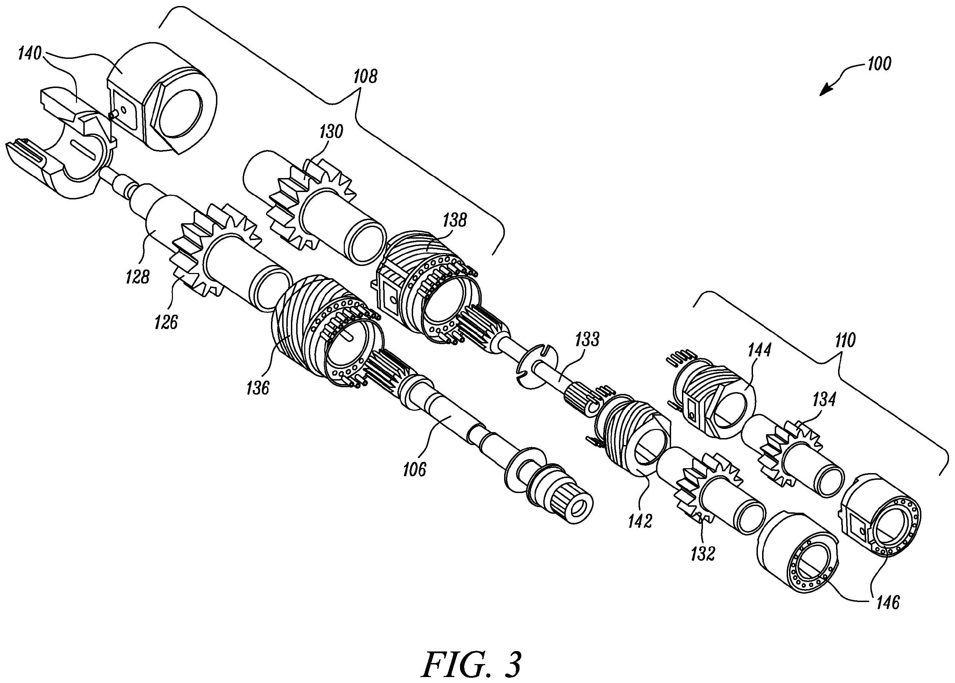

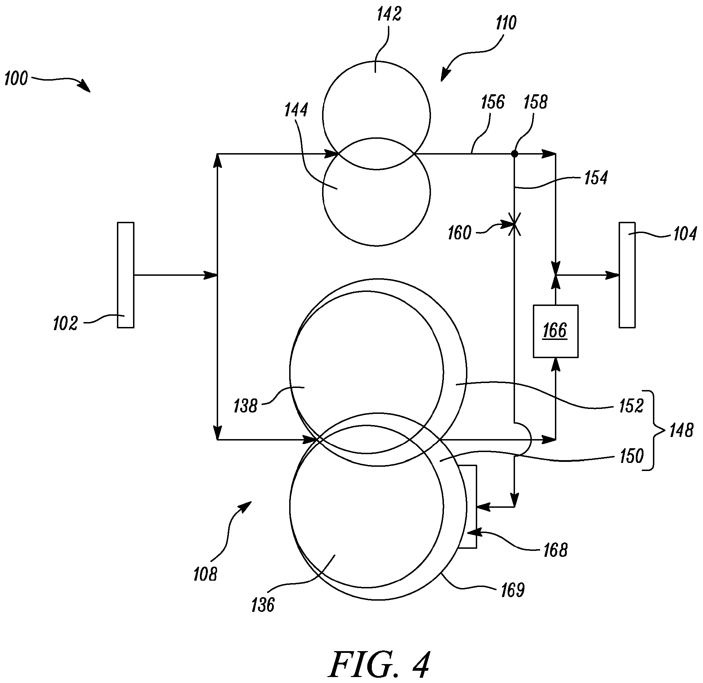

**FIG. 2** is a cut away perspective view of the gear pump assembly 100, according to an embodiment of the present disclosure. **FIG. 3** shows an exploded view of the gear pump assembly 100, with some components not shown, according to an embodiment of the present disclosure. Specifically, only gear components of the gear pump assembly 100 are shown in FIG. 3. **FIG. 4** is a schematic view of the gear pump assembly 100, with some components not shown, according to an embodiment of the present disclosure.

Referring to FIGS. 2 to 4, the gear pump assembly 100 includes an inlet 102 (shown in FIG. 4) configured to receive the fluid (i.e., fuel) and an outlet 104 (shown in FIG. 4) to discharge a required amount of the fluid to the gas turbine engine 10. The gear pump assembly 100 further includes a main drive shaft 106, a secondary gear stage 108, and a primary gear stage 110 configured to pump the fluid from the inlet 102 to the outlet 104. The secondary gear stage 108 may be configured to selectively pump the fluid from the inlet 102 to the outlet 104.

The gear pump assembly 100 further includes a housing 112 receiving the primary gear stage 110 and the secondary gear stage 108 therein. Specifically, the housing 112 includes a secondary housing 114 for receiving the secondary gear stage 108 and a primary housing 116 for receiving the primary gear stage 110. The gear pump assembly 100 further includes a flange 118 for mounting of the gear pump assembly 100.

The gear pump assembly 100 further includes a centrifugal pump 120, a low-pressure stage housing 122 receiving the centrifugal pump 120, and a centrifugal stage back plate 124 which acts as an end cover for the secondary housing 114 and additionally as a back plate for the centrifugal pump 120. The low-pressure stage housing 122 is disposed remote from the flange 118.

The centrifugal pump 120 forms the low-pressure stage of the gear pump assembly 100. The primary gear stage 110 and the secondary gear stage 108 together form the high-pressure stage of the gear pump assembly 100. The secondary gear stage 108 has a greater displacement than the primary gear stage 110. Typically, the primary gear stage 110 is pressurized at all flight conditions, while the secondary gear stage 108 is pressurized for take-off and low speed start conditions. The secondary gear stage 108 functions as a step-a-side gear box for the primary gear stage 110.

Some components, such as the flange 118, the housing 112, and the ones associated with the centrifugal pump 120 are not shown in FIG. 3 for illustrative purposes.

The secondary gear stage 108 includes a secondary driver gear 126 driven by the main drive shaft 106. The main drive shaft 106 is powered and driven by an engine accessory gearbox (not shown). The main drive shaft 106 is connected directly to the secondary driver gear 126 of the secondary gear stage 108. The main drive shaft 106 is further connected, via an extension shaft 128, to an impeller (not shown) of the centrifugal pump 120.

The secondary gear stage 108 further includes a secondary driven gear 130 meshed with and driven by the secondary driver gear 126. The primary gear stage 110 includes a primary driver gear 132 drivably coupled to and driven by the secondary driven gear 130. The gear pump assembly 100 further includes a drive shaft 133 which drivably connects the secondary driven gear 130 and the primary driver gear 132. In other words, the drive shaft 133 transfers power from the secondary gear stage 108 to the primary gear stage 110. The primary gear stage 110 further includes a primary driven gear 134 meshed with and driven by the primary driver gear 132.

The secondary gear stage 108 further includes a secondary driver bearing block 136 disposed adjacent to and supporting the secondary driver gear 126. The secondary gear stage 108 further includes a secondary driven bearing block 138 disposed adjacent to and supporting the secondary driven gear 130. Each of the secondary driver bearing block 136 and the secondary driven bearing block 138 is a pressure loaded bearing block.

The secondary gear stage 108 further includes a pair of secondary solid bearing blocks 140. One secondary solid bearing block 140 from the pair of secondary solid bearing blocks 140 is disposed adjacent to and supports the secondary driver gear 126, and the other secondary solid bearing block 140 from the pair of secondary solid bearing blocks 140 is disposed adjacent to and supports the secondary driven gear 130.

The secondary driver bearing block 136 and the corresponding secondary solid bearing block 140 are adapted to receive a bearing shaft or journal of the secondary driver gear 126. The secondary driven bearing block 138 and the corresponding secondary solid bearing block 140 are adapted to receive a bearing shaft or journal of the secondary driven gear 130.

The pair of secondary solid bearing blocks 140 transfer load from their corresponding gear journals to the housing 112, and also transfer axial thrust load to the housing 112. The secondary driver bearing block 136 and the secondary driven bearing block 138 also transfer load from their corresponding gear journals to the housing 112, and in addition can provide an axial force and a moment against the axially directed face of the corresponding abutting gear.

The primary gear stage 110 further includes a primary driver bearing block 142 disposed adjacent to and supporting the primary driver gear 132. The primary gear stage 110 further includes a primary driven bearing block 144 disposed adjacent to and supporting the primary driven gear 134. Each of the primary driver bearing block 142 and the primary driven bearing block 144 is a pressure loaded bearing block.

The primary gear stage 110 further includes a pair of primary solid bearing blocks 146. One primary solid bearing block 146 from the pair of primary solid bearing blocks 146 is disposed adjacent to and supports the primary driver gear 132, and the other primary solid bearing block 146 from the pair of primary solid bearing blocks 146 is disposed adjacent to and supports the primary driven gear 134.

The housing 112 further includes a binocular bore 148 (shown in FIG. 4). The binocular bore 148 includes a driver bore portion 150 (shown in FIG. 4) receiving the secondary driver bearing block 136 therein. The binocular bore 148 further includes a driven bore portion 152 disposed adjacent to the driver bore portion 150 and receiving the secondary driven bearing block 138 therein.

The gear pump assembly 100 further includes a fluid passage 154 (shown in FIG. 4) extending through the housing 112 and fluidly communicating the primary gear stage 110 with the driver bore portion 150. In an embodiment, the fluid passage 154 may originate at the primary housing 116 in order to fluidly communicate the primary gear stage 110 with the driver bore portion 150. The fluid passage 154 allows a pressurized flow of the fluid from the primary gear stage 110 to the driver bore portion 150 in order to limit a movement of the secondary driver bearing block 136 within the driver bore portion 150.

The pressurized flow of the fluid from the primary gear stage 110 to the driver bore portion 150 in the secondary gear stage 108 generates an additional radial load on the secondary driver bearing block 136 thereby limiting the radial and axial movements of the secondary driver bearing block 136. The reduced movement of the secondary driver bearing block 136 may cause minimal wear of the secondary driver bearing block 136, particularly when the secondary gear stage 108 is in the depressurized state. The minimal wear of the secondary driver bearing block 136 may prevent radial deformation of the secondary driver bearing block 136 during the operation of the gear pump assembly 100.

Therefore, the inclusion of the fluid passage 154 between the primary gear stage 110 and the driver bore portion 150 may increase an efficiency and improve performance of the gear pump assembly 100. Inclusion of the gear pump assembly 100 in the fuel supply system 50 may improve an overall performance of the fuel supply system 50 to supply the fuel or fluid to the gas turbine engine 10.

In some embodiments, the gear pump assembly 100 further includes a pocket 168 disposed on a surface 169 of the driver bore portion 150. The pocket 168 is disposed in fluid communication with the fluid passage 154. The pocket 168 is configured to receive the pressurized flow of the fluid from the fluid passage 154 and deliver the pressurized fluid to the driver bore portion 150 in the secondary gear stage 108. The pocket 168 acts as a provision for the pressurized fluid to add radial load on the secondary driver bearing block 136 thereby limiting the radial and axial movements of the secondary driver bearing block 136. The pocket 168 may be formed by machining a portion of the driver bore portion 150.

In some embodiments, the gear pump assembly 100 includes a primary passage 156 (shown in FIG. 4) fluidly communicating the primary gear stage 110 with the outlet 104. The gear pump assembly 100 further includes a port 158 fluidly communicating the primary passage 156 with the fluid passage 154. Thus, the fluid passage 154 is a bleed passage between the primary passage 156 and the secondary gear stage 108. The bleed passage extends between the port 158 and the driver bore portion 150 in the secondary gear stage 108. The port 158 may be a vent formed in the housing 112 of the gear pump assembly 100. In an embodiment, the port 158 may be a vent formed in the primary housing 116 (shown in FIG. 2).

In some embodiments, the gear pump assembly 100 further includes a non-return valve 166 fluidly disposed between the secondary gear stage 108 and the outlet 104. The non-return valve 166 is configured to allow a unidirectional flow from the secondary gear stage 108 to the outlet 104. The non-return valve 166 prevents a backflow of the fluid from the outlet 104 to the secondary gear stage 108. The non-return valve 166 maintains an adequate pressure range in the secondary gear stage 108. In an application, the non-return valve 166 may be a check valve.

In some embodiments, the gear pump assembly 100 further includes a flow restrictor 160 fluidly disposed in the fluid passage 154 between the primary gear stage 110 and the driver bore portion 150 to limit a leakage of the fluid from the primary gear stage 110 to the driver bore portion 150. This may ensure that an adequate pressure is maintained to provide sufficient radial load on the secondary driver bearing block 136 so as to limit the radial and axial movements of the secondary driver bearing block 136. Prevention of fluid leakage from primary gear stage 110 to the secondary gear stage 108 may ensure that the secondary gear stage 108 is not pressurized at lower flow pressures of the fluid in the gear pump assembly 100.

In some embodiments, the flow restrictor 160 is a pressure-actuated valve. The pressure-actuated valve may be set to actuate at a particular threshold pressure or may be externally adjustable so as to control the pressurized flow of the fluid from the primary gear stage 110 to the driver bore portion 150 in the secondary gear stage 108.

In some embodiments, the flow restrictor 160 is an electrically actuated valve. The electrically actuated valve may control the amount of fluid which can be conveyed from the primary gear stage 110 to the driver bore portion 150 in the secondary gear stage 108 in response to receiving a control signal from a controller (not shown). The electrically actuated valve may be a solenoid-controlled valve.

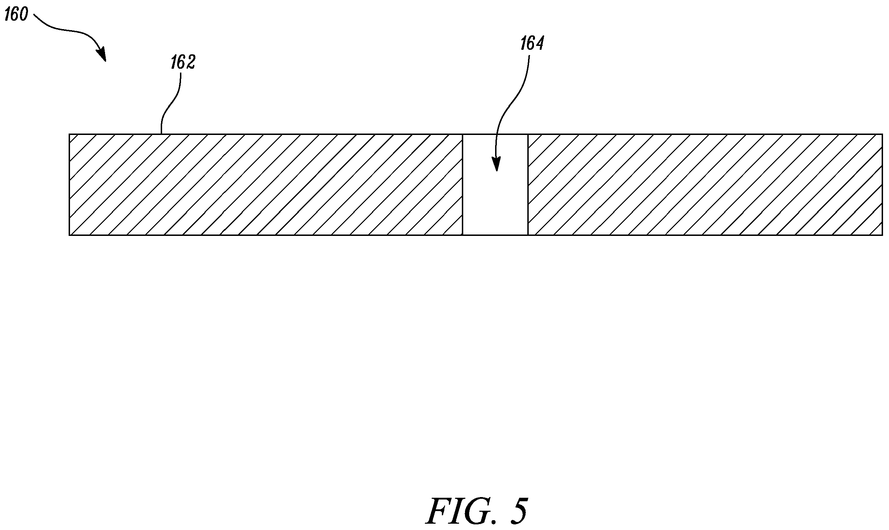

**FIG.** 5 is a schematic view of the flow restrictor 160, according to an embodiment of the present disclosure. In some embodiments, the flow restrictor 160 is an orifice plate 162 including at least one orifice 164. The orifice plate 162 controls an amount of fluid which can be conveyed from the primary gear stage 110 to the driver bore portion 150 in the secondary gear stage 108. In the illustrated embodiment of FIG. 5, the at least one orifice 164 includes a single orifice 164.

In an application, the at least one orifice 164 may include a plurality of orifices. The plurality of orifices 164 may have the same diameter or have different diameters. The at least one orifice 164 may have a circular configuration.

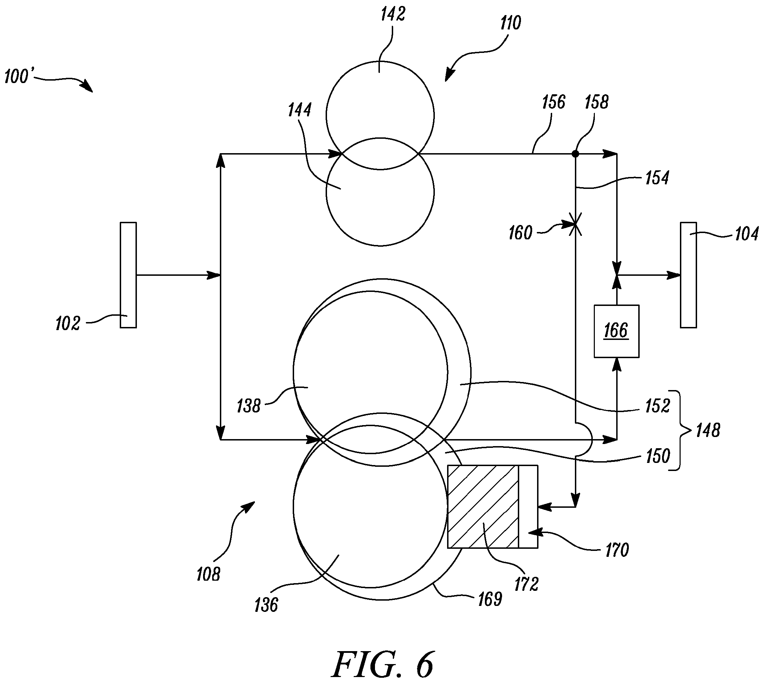

**FIG.** 6 is a schematic view of a gear pump assembly 100', with some components not shown, according to an embodiment of the present disclosure. The gear pump assembly 100' is substantially similar to the gear pump assembly 100 of FIG. 4. A functional advantage of the gear pump assembly 100' is the same as that of the gear pump assembly 100. However, the gear pump assembly 100' does not include any pocket (i.e., the pocket 168 disposed on the surface 169 of the driver bore portion 150).

The gear pump assembly 100' further includes a piston bore 170 extending from the driver bore portion 150 and disposed in fluid communication with the fluid passage 154. The gear pump assembly 100' further includes a piston 172 slidably received within the piston bore 170 and engaging the secondary driver bearing block 136. The piston 172 is configured to be driven by the pressurized fluid towards the secondary driver bearing block 136 in order to apply a movement limiting force on the secondary driver bearing block 136. The piston 172 is energized by the flow of the pressurized fluid in order to apply additional radial load on the secondary driver bearing block 136 which in turn reduces the wear of the secondary driver bearing block 136.

## Claims

1. A gear pump assembly (100, 100') for pumping a fluid, the gear pump assembly (100, 100') comprising:
an inlet (102) configured to receive the fluid;
an outlet (104);
a main drive shaft (106);
a secondary gear stage (108) comprising a secondary driver gear (126) driven by the main drive shaft (106), and a secondary driven gear (130) meshed with and driven by the secondary driver gear (126);
a primary gear stage (110) configured to pump the fluid from the inlet (102) to the outlet (104), the primary gear stage (110) comprising a primary driver gear (132) drivably coupled to and driven by the secondary driven gear (130), and a primary driven gear (134) meshed with and driven by the primary driver gear (132); and
a housing (112) receiving the primary gear stage (110) and the secondary gear stage (108) therein, the housing (112) comprising a binocular bore (148), the binocular bore (148) comprising:
a driver bore portion (150) receiving the secondary driver bearing block (136) therein; and
a driven bore portion (152) disposed adjacent to the driver bore portion (150) and receiving the secondary driven bearing block (138) therein;
the gear pump assembly (100, 100') being **characterised in that**:
the secondary gear stage (108) further comprises a secondary driver bearing block (136) disposed adjacent to and supporting the secondary driver gear (126), and a secondary driven bearing block (138) disposed adjacent to and supporting the secondary driven gear (130); and
the gear pump assembly (100, 100') further comprises a fluid passage (154) extending through the housing (112) and fluidly communicating the primary gear stage (110) with the driver bore portion (150), wherein the fluid passage (154) allows a pressurized flow of the fluid from the primary gear stage (110) to the driver bore portion (150) in order to limit a movement of the secondary driver bearing block (136) within the driver bore portion (150).

2. The gear pump assembly (100, 100') of claim 1, further comprising a flow restrictor (160) fluidly disposed in the fluid passage (154) between the primary gear stage (110) and the driver bore portion (150) to limit a leakage of the fluid from the primary gear stage (110) to the driver bore portion (150).

3. The gear pump assembly (100, 100') of claim 2, wherein the flow restrictor (160) is an orifice plate (162) comprising at least one orifice (164).

4. The gear pump assembly (100, 100') of claim 2, wherein the flow restrictor (160) is a pressure-actuated valve.

5. The gear pump assembly (100, 100') of claim 2, wherein the flow restrictor (160) is an electrically actuated valve.

6. The gear pump assembly (100) of any preceding claim, further comprising a pocket (168) disposed on a surface (169) of the driver bore portion (150) and disposed in fluid communication with the fluid passage (154), wherein the pocket (168) is configured to receive the pressurized flow of the fluid from the fluid passage (154) and deliver the pressurized fluid to the driver bore portion (150).

7. The gear pump assembly (100') of any one of claims 1 to 5, further comprising:
a piston bore (170) extending from the driver bore portion (150) and disposed in fluid communication with the fluid passage (154); and
a piston (172) slidably received within the piston bore (170) and engaging the secondary driver bearing block (136), wherein the piston (172) is configured to be driven by the pressurized fluid towards the secondary driver bearing block (136) in order to apply a movement limiting force on the secondary driver bearing block (136).

8. The gear pump assembly (100, 100') of any preceding claim, further comprising a non-return valve (166) fluidly disposed between the secondary gear stage (108) and the outlet (104), wherein the non-return valve (166) is configured to allow a unidirectional flow from the secondary gear stage (108) to the outlet (104).

9. The gear pump assembly (100, 100') of any preceding claim, further comprising:
a primary passage (156) fluidly communicating the primary gear stage (110) with the outlet (104); and
a port (158) fluidly communicating the primary passage (156) with the fluid passage (154).

10. The gear pump assembly (100, 100') of any preceding claim, wherein the secondary gear stage (108) has a greater displacement than the primary gear stage (110).

11. A fuel supply system (50) of a gas turbine engine (10), the fuel supply system (50) comprising the gear pump assembly (100, 100') according to any preceding claim for pumping a fuel.

12. A gas turbine engine (10) including the fuel supply system (50) of claim 11.

## Patentansprüche

1. Zahnradpumpenanordnung (100, 100') zum Pumpen eines Fluids, wobei die Zahnradpumpenanordnung (100, 100') Folgendes umfasst:
einen Einlass (102), der dazu konfiguriert ist, das Fluid aufzunehmen;
einen Auslass (104);
eine Hauptantriebswelle (106);
eine sekundäre Getriebestufe (108), umfassend ein sekundäres Antriebszahnrad (126), das von der Hauptantriebswelle (106) angetrieben wird, und ein sekundäres angetriebenes Zahnrad (130), das mit dem sekundären Antriebszahnrad (126) verzahnt ist und von diesem angetrieben wird;
eine primäre Getriebestufe (110), die dazu konfiguriert ist, das Fluid von dem Einlass (102) zu dem Auslass (104) zu pumpen, wobei die primäre Getriebestufe (110) ein primäres Antriebszahnrad (132), das antriebsmäßig an das sekundäre angetriebene Zahrad (130) gekoppelt ist und von diesem angetrieben wird, und ein primäres angetriebenes Zahnrad (134), das mit dem primären Antriebszahnrad (132) verzahnt ist und von diesem angetrieben wird, umfasst; und
ein Gehäuse (112), das die primäre Getriebestufe (110) und die sekundäre Getriebestufe (108) darin aufnimmt, wobei das Gehäuse (112) eine binokulare Bohrung (148) umfasst, wobei die binokulare Bohrung (148) Folgendes umfasst:
einen Antriebsbohrungsabschnitt (150), der den sekundären Antriebslagerblock (136) darin aufnimmt; und
einen angetriebenen Bohrungsabschnitt (152), der benachbart zu dem Antriebsbohrungsabschnitt (150) angeordnet ist und den sekundären angetriebenen Lagerblock (138) darin aufnimmt;
wobei die Zahnradpumpenanordnung (100, 100') **dadurch gekennzeichnet ist, dass**:
die sekundäre Getriebestufe (108) ferner einen sekundären Antriebslagerblock (136), der benachbart zu dem sekundären Antriebszahnrad (126) angeordnet ist und dieses stützt, und einen sekundären angetriebenen Lagerblock (138), der benachbart zu dem sekundären angetriebenen Zahnrad (130) angeordnet ist und dieses stützt, umfasst; und
die Zahnradpumpenanordnung (100, 100') ferner einen Fluiddurchlass (154) umfasst, der sich durch das Gehäuse (112) erstreckt und die primäre Getriebestufe (110) in Fluidkommunikation mit dem Antriebsbohrungsabschnitt (150) bringt, wobei der Fluiddurchlass (154) einen druckbeaufschlagten Fluss des Fluids von der primären Getriebestufe (110) zu dem Antriebsbohrungsabschnitt (150) ermöglicht, um eine Bewegung des sekundären Antriebslagerblocks (136) innerhalb des Antriebsbohrungsabschnitts (150) zu begrenzen.

2. Zahnradpumpenanordnung (100, 100') nach Anspruch 1, ferner umfassend einen Durchflussbegrenzer (160), der fluidisch in dem Fluiddurchlass (154) zwischen der primären Getriebestufe (110) und dem Antriebsbohrungsabschnitt (150) angeordnet ist, um ein Austreten des Fluids aus der primären Getriebestufe (110) in den Antriebsbohrungsabschnitt (150) zu begrenzen.

3. Zahnradpumpenanordnung (100, 100') nach Anspruch 2, wobei der Duchflussbegrenzer (160) eine Öffnungsplatte (162) umfassend mindestens eine Öffnung (164) ist.

4. Zahnradpumpenanordnung (100, 100') nach Anspruch 2, wobei der Durchflussbegrenzer (160) ein druckbetätigtes Ventil ist.

5. Zahnradpumpenanordnung (100, 100') nach Anspruch 2, wobei der Durchflussbegrenzer (160) ein elektrisch betätigtes Ventil ist.

6. Zahnradpumpenanordnung (100) nach einem vorhergehenden Anspruch, ferner umfassend eine Tasche (168), die auf einer Oberfläche (169) des Antriebsbohrungsabschnitts (150) angeordnet ist und in Fluidkommunikation mit dem Fluiddurchlass (154) angeordnet ist, wobei die Tasche (168) dazu konfiguriert ist, den druckbeaufschlagten Fluss des Fluids aus dem Fluiddurchlass (154) aufzunehmen und das druckbeaufschlagte Fluid an den Antriebsbohrungsabschnitt (150) abzugeben.

7. Zahnradpumpenanordnung (100') nach einem der Ansprüche 1 bis 5, ferner umfassend:
eine Kolbenbohrung (170), die sich aus dem Antriebsbohrungsabschnitt (150) erstreckt und in Fluidkommunikation mit dem Fluiddurchlass (154) angeordnet ist; und
einen Kolben (172), der verschiebbar innerhalb der Kolbenbohrung (170) aufgenommen ist und in den sekundären Antriebslagerblock (136) eingreift, wobei der Kolben (172) dazu konfiguriert ist, von dem druckbeaufschlagten Fluid hin zu dem sekundären Antriebslagerblock (136) angetrieben zu werden, um eine Bewegungsbegrenzungskraft auf den sekundären Antriebslagerblock (136) auszuüben.

8. Zahnradpumpenanordnung (100, 100') nach einem vorhergehenden Anspruch, ferner umfassend ein Rückschlagventil (166), das fluidisch zwischen der sekundären Getriebestufe (108) und dem Auslass (104) angeordnet ist, wobei das Rückschlagventil (166) dazu konfiguriert ist, einen unidirektionalen Fluss von der sekundären Getriebestufe (108) zu dem Auslass (104) zu ermöglichen.

9. Zahnradpumpenanordnung (100, 100') nach einem vorhergehenden Anspruch, ferner umfassend:
einen primären Durchlass (156), der die primäre Getriebestufe (110) in Fluidkommunikation mit dem Auslass (104) bringt; und
einen Anschluss (158), der den primären Durchlass (156) in Fluidkommunikation mit dem Fluiddurchlass (154) bringt.

10. Zahnradpumpenanordnung (100, 100') nach einem vorhergehenden Anspruch, wobei die sekundäre Getriebestufe (108) eine größere Verdrängung als die primäre Getriebestufe (110) aufweist.

11. Treibstoffversorgungssystem (50) eines Gasturbinentriebwerks (10), wobei das Treibstoffversorgungssystem (50) die Zahnradpumpenanordnung (100, 100') nach einem vorhergehenden Anspruch zum Pumpen eines Treibstoffs umfasst.

12. Gasturbinentriebwerk (10), beinhaltend das Treibstoffversorgungssystem (50) nach Anspruch 11.

## Revendications

1. Ensemble pompe à engrenages (100, 100') pour pomper un fluide, l'ensemble pompe à engrenages (100, 100') comprenant :
une entrée (102) conçue pour recevoir le fluide ;
une sortie (104) ;
un arbre d'entraînement principal (106) ;
un étage d'engrenage secondaire (108) comprenant un engrenage d'entraînement secondaire (126) entraîné par l'arbre d'entraînement principal (106), et un engrenage entraîné secondaire (130) engrené avec l'engrenage d'entraînement secondaire (126) et entraîné par celui-ci ;
un étage d'engrenage primaire (110) conçu pour pomper le fluide de l'entrée (102) vers la sortie (104), l'étage d'engrenage primaire (110) comprenant un engrenage d'entraînement primaire (132) couplé en entraînement à l'engrenage entraîné secondaire (130) et entraîné par celui-ci, et un engrenage entraîné primaire (134) engrené avec l'engrenage d'entraînement primaire (132) et entraîné par celui-ci ; et
un boîtier (112) recevant l'étage d'engrenage primaire (110) et l'étage d'engrenage secondaire (108) à l'intérieur de celui-ci, le boîtier (112) comprenant un alésage binoculaire (148), l'alésage binoculaire (148) comprenant :
une partie d'alésage d'entraînement (150) recevant le bloc de palier d'entraînement secondaire (136) à l'intérieur ; et
une partie d'alésage entraîné (152) disposée adjacente à la partie d'alésage d'entraînement (150) et recevant le bloc de palier entraîné secondaire (138) à l'intérieur ;
l'ensemble pompe à engrenages (100, 100') étant **caractérisé en ce que** :
l'étage d'engrenage secondaire (108) comprend en outre un bloc de palier d'entraînement secondaire (136) disposé adjacent à l'engrenage d'entraînement secondaire (126) et supportant celui-ci, et un bloc de palier entraîné secondaire (138) disposé adjacent à l'engrenage entraîné secondaire (130) et supportant celui-ci ; et
l'ensemble pompe à engrenage (100, 100') comprend en outre un passage de fluide (154) s'étendant à travers le boîtier (112) et mettant en communication fluidique l'étage d'engrenage primaire (110) avec la partie d'alésage d'entraînement (150), dans lequel le passage de fluide (154) permet un écoulement sous pression du fluide de l'étage d'engrenage primaire (110) vers la partie d'alésage d'entraînement (150) afin de limiter un mouvement du bloc de palier d'entraînement secondaire (136) à l'intérieur de la partie d'alésage d'entraînement (150).

2. Ensemble pompe à engrenages (100, 100') de la revendication 1, comprenant en outre un élément de restriction d'écoulement (160) disposé de manière fluidique dans le passage de fluide (154) entre l'étage d'engrenage primaire (110) et la partie d'alésage d'entraînement (150) pour limiter une fuite du fluide de l'étage d'engrenage primaire (110) vers la partie d'alésage d'entraînement (150).

3. Ensemble pompe à engrenages (100, 100') de la revendication 2, dans lequel l'élément de restriction d'écoulement (160) est une plaque à orifice (162) comprenant au moins un orifice (164).

4. Ensemble pompe à engrenages (100, 100') de la revendication 2, dans lequel l'élément de restriction d'écoulement (160) est une soupape actionnée par pression.

5. Ensemble pompe à engrenages (100, 100') de la revendication 2, dans lequel l'élément de restriction d'écoulement (160) est une soupape actionnée électriquement.

6. Ensemble pompe à engrenages (100) d'une quelconque revendication précédente, comprenant en outre une poche (168) disposée sur une surface (169) de la partie d'alésage d'entraînement (150) et disposée en communication fluidique avec le passage de fluide (154), dans lequel la poche (168) est conçue pour recevoir l'écoulement sous pression du fluide à partir du passage de fluide (154) et distribuer le fluide sous pression à la partie d'alésage d'entraînement (150).

7. Ensemble pompe à engrenages (100') de l'une quelconque des revendications 1 à 5, comprenant en outre :
un alésage de piston (170) s'étendant à partir de la partie d'alésage d'entraînement (150) et disposé en communication fluidique avec le passage de fluide (154) ; et
un piston (172) reçu de manière coulissante à l'intérieur de l'alésage de piston (170) et venant en prise avec le bloc de palier d'entraînement secondaire (136), dans lequel le piston (172) est conçu pour être entraîné par le fluide sous pression en direction du bloc de palier d'entraînement secondaire (136) afin d'appliquer une force de limitation de mouvement sur le bloc de palier d'entraînement secondaire (136).

8. Ensemble pompe à engrenages (100, 100') d'une quelconque revendication précédente, comprenant en outre un clapet anti-retour (166) disposé de manière fluidique entre l'étage d'engrenage secondaire (108) et la sortie (104), dans lequel le clapet anti-retour (166) est conçu pour permettre un écoulement unidirectionnel de l'étage d'engrenage secondaire (108) vers la sortie (104).

9. Ensemble pompe à engrenages (100, 100') d'une quelconque revendication précédente, comprenant en outre :
un passage primaire (156) mettant en communication fluidique l'étage d'engrenage primaire (110) avec la sortie (104) ; et
un orifice (158) mettant en communication fluidique le passage primaire (156) avec le passage de fluide (154).

10. Ensemble pompe à engrenages (100, 100') d'une quelconque revendication précédente, dans lequel l'étage d'engrenage secondaire (108) présente un déplacement plus important que l'étage d'engrenage primaire (110).

11. Système d'alimentation en carburant (50) d'un moteur à turbine à gaz (10), le système d'alimentation en carburant (50) comprenant l'ensemble pompe à engrenages (100, 100') selon une quelconque revendication précédente pour pomper un carburant.

12. Moteur à turbine à gaz (10) comprenant le système d'alimentation en carburant (50) de la revendication 11.
